# EUROPEAN PATENT SPECIFICATION

(11) **EP 3 099 039 B1**
(45) Date of publication and mention of the grant of the patent: **28.02.2024**
(21) Application number: 14878069.5
(22) Date of filing: 05.06.2014
(51) Int. Cl.: H04M 1/18, H04M 1/02, H05K 5/06, H05K 5/00, H04B 1/3888

(54) **TRI-PROOF STRUCTURE AND MOBILE PHONE USING SAME**
TRI-PROOF-STRUKTUR UND MOBILTELEFON DAMIT
STRUCTURE À TRIPLE PROTECTION ET TÉLÉPHONE MOBILE L'UTILISANT

(30) Priority: 10.01.2014 CN 201410011754
(43) Date of publication of application: 30.11.2016
(73) Proprietor: Power Idea Technology (Shenzhen) Co., Ltd., Shenzhen, Guangdong 518000 (CN)
(72) Inventor: MA, Jidong, Shenzhen Guangdong 518000 (CN); CHEN, Dongming, Shenzhen Guangdong 518000 (CN)
(74) Representative: CMS Cameron McKenna Nabarro Olswang LLP
(86) International application number: PCT/CN2014/079276
(87) International publication number: WO 2015/103843

(56) References cited:
- CN-A- 101 522 006
- CN-A- 103 082 619
- CN-A- 103 780 726
- GB-A- 2 379 333
- JP-A- 2011 155 527
- US-A1- 2013 221 812

## Description

### FIELD

The subject matter herein generally relates to a tri-proof structure, and a mobile phone using the same.

### BACKGROUND

In recent years, with the increase of people's outdoor activities, tri-proof products (waterproof, dustproof and shockproof) has been more and more applications. A conventional tri-proof structure usually include a first casing, a waterproof rubber ring, and a second casing. The first casing is provided with a first casing soft rubber. The first casing soft rubber and the first casing are double-color molding. The second casing is also provided with a second casing soft rubber. The second casing soft rubber and the second casing are also double-color molding. The first casing soft rubber and the second casing soft rubber cooperatively form a soft rubber surface, the soft rubber surface provides a buffer and shockproof effect when the mobile phone dropping. Simultaneously, the second casing further defines a groove, the waterproof rubber ring is assembled in the groove. The first casing presses the waterproof rubber ring and is assembled together with the second casing via a fixing member. In the aforementioned structure, because the first casing soft rubber and the first casing are double-color molding, and the second casing soft rubber and the second casing are double-color molding, a structure of the mold is complex, a cost of the mold manufacturing is high, and a requirement to the molding machine is high, thus increasing manufacturing cost of a mobile phone. In addition, because the waterproof structure is the sole complete circle structure and the cross-section area of the waterproof structure is small, during the process of assembling the waterproof structure to the groove, the operation is inconvenient, and the assembly has an inferior consistency and a structural basis. Thus the waterproof effect is affected. Moreover, in an aspect of the waterproof and sealing effect, because the waterproof effect of the structure mainly depends on a degree of pressure and sealing between the waterproof rubber ring and the first casing and between the waterproof rubber ring and the second casing. However, the waterproof rubber ring has a problem of manufacturing tolerance and an assembly basis, thus a large interference value is required to ensure the waterproof effect. Therefore, a larger locking force is required between the first casing and the second casing. Thus a larger casing strength is accordingly required. In addition, there exists an assembly line after the assembly of the first casing soft rubber and the second casing soft rubber, which affects the appearance of the product. Simultaneously, the first casing soft rubber and the second casing soft rubber only provide a buffer and shockproof effect, and the waterproof rubber ring only provides a waterproof and dustproof effect, both must be used simultaneously to achieve a tri-proof effect.

GB2379333A discloses an electronic device casing. A casing structure for an electronic device such as a mobile phone comprises a carrier having first and second faces against which the device components may be fitted, and first and second covers adapted to attach to the carrier and form enclosures over at least parts of the first and second faces. The carrier has a receptacle around its edge for receiving the first and second covers, having a first recess for receiving a rim of the first cover and a second recess for receiving a rim of the second cover. Cushioning layers are mounted in the recesses for cushioning the cover in the recess. The carrier enables softer, more malleable materials such as magnesium to be used for casing covers as it protects the covers from external shock and damage.

US2013221812A1 discloses a television. The television includes an elastic portion, a first member, and a second member. The elastic portion includes a packing and a protrusion partially on the packing. The first member includes a first portion configured to face the protrusion. The second member includes a second portion configured to face the protrusion from a side opposite to the first portion. The packing is configured to be between the first member and the second member.

### SUMMARY OF THE INVENTION

The present disclosure has been devised in view of the prior art described above, namely an object of the present disclosure is to provide a tri-proof structure. The structure simultaneously achieves a tri-proof effect, reduces a production manufacturing cost of the product, and reduces an assembly difficulty. Simultaneously, the assembly consistency is better and the tri-proof effect is more reliable.

The present disclosure employs two kinds of tri-proof structures on a single structure, resolves a tri-proof require at difference position structural features of the product, thus the application of the present disclosure is wider and more flexible.

Another object of the present disclosure is to provide a mobile phone using the same. The manufacturing cost of the mobile phone is decreased and the assembly efficiency is improved.

A tri-proof structure is a waterproof, dustproof and shockproof housing, the tri-proof structure includes a first casing and a third casing. The tri-proof structure further includes a second casing. The first casing is provided with a protrusion. The third casing is provided with a convex block. The convex block is a protrusion belonging to the third casing. The second casing is made of soft material. The soft material is elastic material. The second casing defines a first groove corresponding to the protrusion of the first casing and defines a second groove corresponding to the convex block of the third casing. The protrusion and the first groove, and the convex block and the second groove are both interference fittings. The first casing and the third casing are both assembled to the second casing. The second casing further includes an appearance surface. The appearance surface is an external and visible peripheral surface of the second casing. The first casing and the third casing each further include an outer surface. The appearance surface is protruded out of the outer surfaces of the first casing and the third casing. The third casing further includes opposite upper and lower ends. The opposite upper and lower ends of the third casing employs another waterproof structure. The opposite upper and lower ends of the third casing each define a concavity. The second casing also includes another opposite upper and lower ends. The another opposite upper and lower ends of the third casing each is a strip-like structure. Each strip-like structure is received in one concavity and is an interference fit with the first casing to assemble together with the first casing. The first casing also includes opposite upper and lower ends structures. The opposite upper and lower ends structures of the first casing are respectively provided with a protruding strip. The protruding strip is a protrusion and strip-shaped. The protruding strips of the first casing are assembled in the concavities of the third casing and are interference fit with the strip-like structures of the second casing in the concavities of the third casing. The protruding strips of the first casing presses the strip-like structures of the second casing to be elastically deformed in the concavities of the third casing.

A mobile phone using the same is provided.

Because the groove of the second casing is interference fit with the protrusion of the first casing and is interference fit with the convex block of the third casing, thus efficiently achieving a waterproof and dustproof effect between the second casing and the first casing and between the second casing and the third casing. Simultaneously the second casing is made of soft material and is protruded out of the outer surface of the first casing and the third casing, providing a buffer and shockproof effect, therefore the present disclosure employs a single structure and simultaneously achieves a tri-proof effect. In addition, the first casing, the second casing, and the third casing are respectively made of a single material, which does not need double-color molding and save a molding production cost, a common sole color molding machine satisfies the production requirement, thereby decreasing a production manufacturing cost of the product. In the assembly process, because of the groove defined at the second casing, the third casing and the second casing, and the first casing and the second casing each are assembled in a plug manner. As compared to the related art of providing a complete circle waterproof soft rubber with a small cross-section area, the operation process is simpler and more reliable. Simultaneously, the second casing is made of soft material, the first casing, the second casing, and the third casing are interference fits and tight joined after assembling, there is not gap between the first casing, the second casing, and the third casing. Moreover, the assembly is employed a plug manner with a certain plug depth. Therefore, as compared to the related art of merely press fit between the first casing and the second casing, the waterproof and dustproof effect is more reliable.

Furthermore, because the size of the ends of the casing is small and employing a manner that the third casing is concave and the second casing is a strip-like structure, the present disclosure also achieves a better waterproof effect in a defined space.

### BRIEF DESCRIPTION OF THE DRAWINGS

Implementations of the present technology will now be described, by way of example only, with reference to the attached figures, wherein:
FIG. 1 illustrates an exploded view of an embodiment of a tri-proof structure.
FIG. 2 illustrates an assembly view of an embodiment of FIG. 1.
FIG. 3 illustrates a cross-sectional view taken along line A-A of FIG. 2.
FIG. 4 illustrates an enlarged view of a portion "R" of FIG. 3.
FIG. 5 illustrates an exploded view of FIG. 4.
FIG. 6 illustrates a cross-sectional view taken along line B-B of FIG. 2.
FIG. 7 illustrates an enlarged view of a portion "S" of FIG. 6.
FIG. 8 illustrates an exploded view of FIG. 7.
FIG. 9 illustrates a cross-sectional view taken along line C-C of FIG. 2.

### DETAILED DESCRIPTION

For the purpose, technical solutions, and advantages of the present disclosure will become apparent below in conjunction with the accompanying drawings and specific embodiments of the present disclosure to further illustrate a tri-proof structure of the present disclosure and the mobile phone using the same.

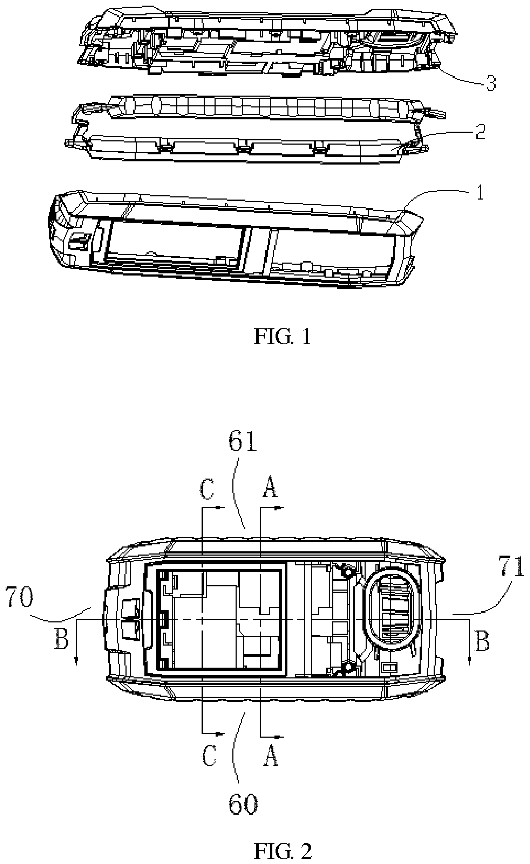

Referring to FIGs. 1-2, a tri-proof structure for a mobile phone is shown. The mobile phone includes a first casing 1, a second casing 2, and a third casing 3. The first casing 1 and the third casing 3 are both assembled to the second casing 2, and are assembled together via a fixing member. The tri-proof structure includes opposite left and right sides 60, 61 and opposite upper and lower ends 70, 71. The waterproof structures that the opposite left and right sides 60, 61 and the opposite upper and lower ends 70, 71 employing are different, thus a problem that the space of the opposite left and right sides 60, 61 are sufficient and the space of the opposite upper and lower sides 70, 71 are limited are resolved.

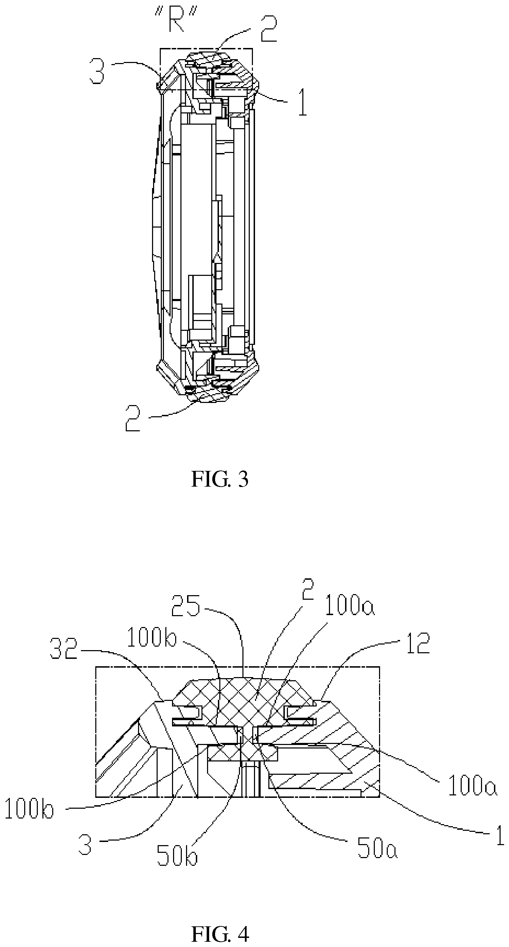

Referring to FIGs. 3-5, the tri-proof structure for the opposite left and right sides 60, 61 is shown. The first casing 1 is provided with a protrusion 11. The protrusion 11 includes a first top surface 11a. The third casing 3 is also provided with a convex block 31. The convex block 31 includes a second top surface 31a. The second casing 2 is made of soft material, and defines a first groove 21 corresponding to the protrusion 11 of the first casing 1 and a second groove 22 corresponding to the convex block 31 of the third casing 3. The first groove 21 includes a first bottom surface 21a, and the second groove 22 includes a second bottom surface 22a. The first top surface 11a and the first bottom surface 21a, and the second top surface 31a and the second bottom surface 22a each is interference fit 50a or interference fit 50b. The interference fits respectively ensure a waterproof and dustproof effect between the first casing and the second casing, and a waterproof and dustproof effect between the second casing 2 and the third casing 3. Preferably, the protrusion 11 further includes two opposite first sidewalls 11b. A gap 100a is provided between the first sidewall 11b and the first groove 21. The convex block 31 also includes two opposite second sidewalls 31b. Similarly, a gap 100b is also provided between each second sidewall 31b and one corresponding second groove 22. Thus, the assembly of the protrusions 11 and the first grooves 21 and the assembly of the convex blocks 31 and the second grooves 22 are convenient and respectively directly plug into each other. Simultaneously, the gaps 100a and 100b respectively provide a deformation transferee space for the interference fits 50a and 50b. Thus, the deformation is more reliable, which improves the waterproof and dustproof effect. Simultaneously, the second casing 2 further includes an appearance surface 25. The first casing 1 and the third casing 3 respectively further include an outer surface 12 and an outer surface 32. The outer surface 12 and the outer surface 32 are substantially located on a same plane. The appearance surface 25 is protruded out the plane formed by the outer surfaces 12 and 32 after assembling, simultaneously a partial structure of the second casing 2 at the appearance surface 25 wraps up the outer surfaces 12 and 32 for a better combination between the first casing 1 and the second casing 2 and between the second casing 2 and the third casing 3. When the product is dropped, the appearance surfaces 25 of the second casing 2 is firstly contacted, thereby resolving the shockproof problem efficiently. Simultaneously, an anti-skid structure is provided on the appearance surface 25 and increases a feel of the user.

Preferably, the position of the protrusion 11 of the first casing 1 and the position of the convex block 31 of the third casing 3 are opposite to each other, and the position of each first groove 21 and the position of the corresponding second groove 22 are opposite to each other rather than in a staggered configuration. A divider is further provided between the first groove 21 and the second groove 22. The protrusion 11 and the convex block 31 cooperatively extrude the divider. Thus, the protrusion 11 and the convex block 31 support each other during the cooperatively extruding process, and the deformation of the divider is ensured to be more efficient.

The first casing 1 is further provided with at least four first positioning columns 16. The second casing 2 is provided with a number of first positioning holes 26 whose number is the same as the number of the first positioning columns 16. The position of each first positioning column 16 is opposite to the position of one corresponding first positioning hole 26. Moreover, the assembly of the first positioning columns 16 and the first positioning holes 26 provide a positioning function for the assembly of the first casing 1 and the second casing 2. Preferably, the third casing 3 is further provided with at least four second positioning columns 36. The second casing 2 is also provided with a number of second positioning holes 27 whose number is the same as the number of the second positioning columns 36. The position of each second positioning column 36 is opposite to the position of one corresponding second positioning hole 27. Moreover, the assembly of the second positioning columns 36 and the second positioning holes 27 provide a positioning function for the assembly of the second casing 2 and the third casing 3.

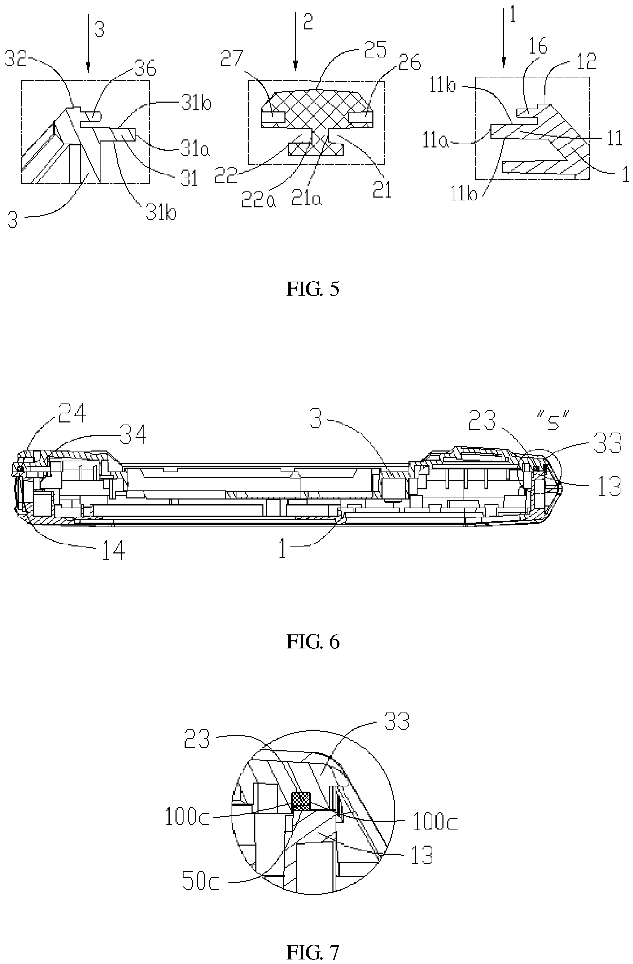

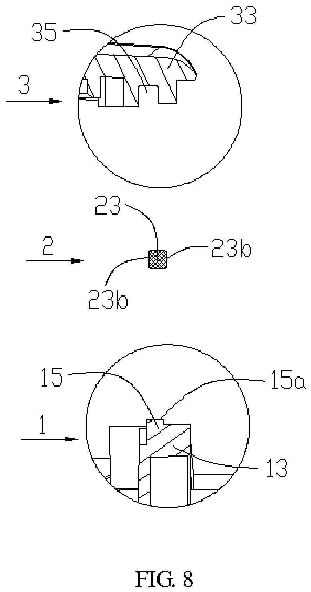

Referring to FIGs. 6-8, a tri-proof structure for the opposite upper and lower ends 70, 71 is shown. The third casing 3 further includes opposite upper and lower ends 33, 34. The opposite upper and lower ends 33, 34 each defines a concavity 35. The second casing 2 also includes another opposite upper and lower ends 23, 24. The another opposite upper and lower ends 23, 24 each is a strip-like structure. Each strip-like structure is assembled in one concavity 35 and is interference fit with the first casing 1 during further assembling. The interference fit ensures the waterproof and dustproof effect between the opposite upper and lower ends of the first casing 1 and the second casing 2 and between the opposite upper and lower ends of the second casing 2 and the third casing 3. Moreover, the first casing 1 also includes opposite upper and lower ends structures 13, 14. The opposite upper and lower ends structures 13, 14 each is provided with a protruding strip 15. Each protruding strip 15 is assembled in one concavity 35 and presses the strip-like structure 23 or the strip-like structure 24 to form an interference fit. The assembly of the protruding strips 15 in the concavities 35 sufficiently ensures the pressured and reliable deformation of the strip-like structures 23, 24, thus the waterproof and dustproof effect is improved. Each protruding strip 15 further includes a top surface 15a. The strip-like structures 23, 24 each includes two opposite sidewalls 23b. The top surface 15a of each protruding strip 15 and each of the strip-like structures 23, 24 is interference fit 50c. A gap 100c is provided between each of the two opposite sidewalls 23b and the concavity 35. Thus, the assembly of each of the strip-like structures 23, 24 and the concavity 35 are convenient.

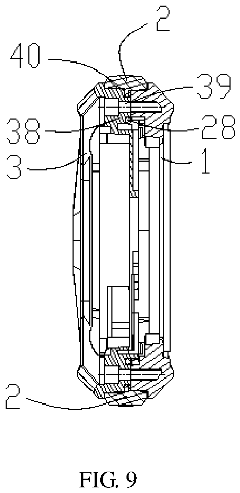

Referring to FIG. 9, the third casing 3 is further provided with at least four protruded cylindrical columns 38. Each cylindrical column 38 defines a bolt hole. Each cylindrical column 38 further includes an annular step 40. The second casing 2 is provided with a number of circular rings 28 whose number is the same as the number of the cylindrical columns 38 and whose position is corresponding to the position of the cylindrical columns 38. Each circular ring 28 is pivoted on one corresponding annular step 40. The first casing 1 is provided with screw holes whose position is corresponding to the position of the bolt holes and whose number is the same as the number of the bolt holes. The third casing 3, the second casing 2, and the first casing 1 are assembled and fixed together via the bolt.

Whether or cases of a change in the structure or the particular embodiment, the tri-proof structure of the present disclosure mainly employs the second casing made of the soft material to simultaneously achieve the tri-proof effect, reduces the production cost of the product. Simultaneously the tri-proof structure of the present disclosure provides extruding transferee space for the elastic deformation generated by the interference fit through reasonable structure design, thus the deformation is ensured to be reliable. The tri-proof structure of the present disclosure fully considers the assembly convenience in the structure design, thus the production efficiency is improved. Moreover, the present disclosure further provides a new tri-proof design idea, namely two kinds of tri-proof manners are combined and applied on a single tri-proof structure.

In the present disclosure, the interference fits 50a, 50b, and 50c form the waterproof and dustproof structure. The second casing 2 is made of soft material and is protruded out of the outer surfaces of the first casing 1 and the third casing 3. The second casing made of soft material is firstly contacted when the mobile phone dropping, thus the second casing provides a buffer and shockproof effect, therefore the present disclosure employs a single second casing structure and simultaneously achieves a tri-proof effect. Simultaneously, the first casing 1, the second casing 2, and the third casing 3 are respectively made of a single material, which does not need double-color molding. The common sole color molding machine satisfies the production requirement, thereby decreasing a production manufacturing cost of the product. In the assembly process, because of the gaps 100a, 100b, and 100c, the assembly is convenient and is completed via a plug manner. As compared to the related art of providing a complete circle waterproof soft rubber with a small cross-section area, the operation process of the present disclosure is simpler and more reliable. In addition, the interference fits 50a, 50b, and 50c each is a plug manner with a certain plug depth. Therefore, the first casing, the second casing, and the third casing are interference fit and held together tightly after assembling, and there is not gap, as compared to the related art of merely press fit between the first casing and the second casing, the waterproof and dustproof effect is more reliable. Moreover, the present disclosure further provides a new tri-proof design idea, namely two kinds of tri-proof manners are combined and applied to a single tri-proof structure. When the space is enough, the tri-proof structure for the opposite left and right sides of the present disclosure is employed. When the space is limited, the tri-proof structure for the opposite upper and lower ends of the present disclosure is employed.

The above detailed description with the accompanying drawings of a tri-proof structure and a mobile phone using the tri-proof structure, but the design ideas of the present disclosure is not limited to the field of mobile phones, for example, any need for waterproof between casing uses the idea of the present disclosure to change and develop. In addition, the combination application of two kinds of the tri-proof structures of the present disclosure further develops to a combination of a number of tri-proof structures.

## Claims

1. A tri-proof structure being a waterproof, dustproof and shockproof housing, the tri-proof structure comprising a first casing (1), a second casing (2), and a third casing (3), the first casing (1) and the third casing (3) being respectively assembled to the second casing (2), the tri-proof structure being **characterized by**:
the first casing (1) provided with a protrusion (11);
the second casing (2) made of soft material and defining a first groove (21) corresponding to the protrusion (11) of the first casing (1), the soft material being elastic material;
the third casing (3) provided with a convex block (31), the convex block (31) being a protrusion belonging to the third casing (3);
wherein the second casing (2) defines a second groove (22) corresponding to the convex block (31);
wherein the protrusion (11) and the first groove (21), and the convex block (31) and the second groove (22) each is interference fit, the second casing (2) further comprises an appearance surface (25), the appearance surface (25) is an external and visible peripheral surface of the second casing (2), the first casing (1) and the third casing (3) further respectively comprises an outer surface (12, 32), the appearance surface (25) is protruded out of the outer surfaces (12, 32) of the first casing (1) and the third casing (3);
wherein the third casing (3) further comprises opposite upper and lower ends (33, 34), the opposite upper and lower ends (33, 34) of the third casing (3) employ another waterproof structure, the opposite upper and lower ends (33, 34) of the third casing (3) respectively define a concavity (35), the second casing (2) also further comprises another opposite upper and lower ends (23, 24), the another opposite upper and lower ends (23, 24) of the second casing (2) are strip-like structures, the another opposite upper and lower ends (23, 24) of the second casing (2) being strip-like structures are assembled in the concavities (35) and are interference fit with the first casing (1) to assemble together with the first casing (1);
wherein the first casing (1) also comprises opposite upper and lower ends structures (13, 14), the opposite upper and lower ends structures (13, 14) of the first casing (1) are respectively provided with a protruding strip (15), the protruding strip (15) is a protrusion and strip-shaped, the protruding strips (15) of the first casing (1) are assembled in the concavities (35) of the third casing (3) to be interference fit with the another opposite upper and lower ends (23, 24) of the second casing (2) being strip-like structures in the concavities (35) of the third casing (3), the protruding strips (15) of the first casing (1) presses the another opposite upper and lower ends (23, 24) of the second casing (2) being strip-like structures to be elastically deformed in the concavities (35) of the third casing (3).

2. The tri-proof structure as described in claim 1, wherein:
each of the protruding strips (15) further comprises a top surface (15a), each of the another opposite upper and lower ends (23, 24) of the second casing (2) being strip-like structures further comprises two opposite sidewalls (23b), the top surface (15a) of each of the protruding strips (15) and each of the another opposite upper and lower ends (23, 24) of the second casing (2) being strip-like structures are interference fit, a gap (100c) is provided between each of the two opposite sidewalls (23b) and the corresponding concavity (35).

3. The tri-proof structure as described in claim 1, wherein:
an anti-skid structure is provided on the appearance surface (25) of the second casing (2).

4. The tri-proof structure as described in claim 1, wherein:
the protrusion comprises a first top surface (11a), the convex block (31) comprises a second top surface (31a), the first groove (21) comprises a first bottom surface (21a), the second groove (22) comprises a second bottom surface (22a), the first top surface (11a) of the protrusion (11) and the first bottom surface (21a) of the first groove (21) are interference fit, and the second top surface (31a) of the convex block (31) and the second bottom surface (22a) of the second groove (22) are interference fit.

5. The tri-proof structure as described in claim 4, wherein:
the protrusion (11) further comprises two opposite first sidewalls (11b), a gap (100a) is provided between each of the first sidewalls (11b) and the first groove (21), the convex block (31) also comprises two opposite second sidewalls (31b), another gap (100b) is provided between each of the second sidewalls (31b) and the second groove (22).

6. The tri-proof structure as described in claim 5, wherein:
the position of the protrusion (11) and the position of the convex block (31) are opposite to each other, the position of the first groove (21) and the position of the second groove (22) are also opposite to each other, a divider is further provided between the first groove (21) and the second groove (22), the protrusion (11) and the convex block (31) cooperatively push against the divider to form an interference fit.

7. The tri-proof structure as described in claim 1, wherein:
the first casing (1) is further provided with at least four first positioning columns (16), the second casing (2) is provided with a plurality of the first positioning holes (26) whose numbers are the same as the numbers of the first positioning columns (16), the position of each of the first positioning columns (16) is opposite to the position of one of the corresponding first positioning holes (26), and each of the first positioning columns (16) is assembled together with one of the corresponding first positioning holes (26).

8. The tri-proof structure as described in claim 7, wherein:
the third casing (3) is further provided with at least four second positioning columns (36), the second casing (2) is also provided with a plurality of second positioning holes (27) whose numbers are the same as the numbers of the second positioning columns (36), the position of each of the second positioning columns (36) is opposite to the position of one of the corresponding second positioning holes (27), and each of the second positioning columns (36) is assembled together with one of the corresponding second positioning holes (27).

9. The tri-proof structure as described in claim 1, wherein:
the third casing (3) is further provided with at least four protruding cylindrical columns (38), each of the cylindrical columns (38) defines a bolt hole, each of the cylindrical columns further comprises an annular step (40), the second casing (2) at the positions corresponding to the positions of the cylindrical columns are provided with a plurality of circular rings (28) whose numbers are the same as the numbers of the cylindrical columns (38), each of the circular rings (28) is sleeved on one of the corresponding annular steps (40), the first casing (1) is provided with screw holes in positions corresponding to the positions of the bolt holes and in numbers the same as the numbers of the bolt holes, the third casing, the second casing, and the first casing are assembled and fixed together via bolts.

10. A mobile phone comprising a tri-proof structure as described in any of claims 1-9.

## Patentansprüche

1. Dreisichere Struktur, die eine wasserdichte, staubdichte und stoßsichere Verkleidung ist, die dreisichere Struktur umfassend ein erstes Gehäuse (1), ein zweites Gehäuse (2) und ein drittes Gehäuse (3), wobei das erste Gehäuse (1) und das dritte Gehäuse (3) jeweils an dem zweiten Gehäuse (2) montiert sind, wobei die dreisichere Struktur **dadurch gekennzeichnet ist, dass:**
das erste Gehäuse (1) mit einem Vorsprung (11) versehen ist;
das zweite Gehäuse (2) aus weichem Material hergestellt ist und eine erste Nut (21) definiert, die dem Vorsprung (11) des ersten Gehäuses (1) entspricht, wobei das weiche Material elastisches Material ist;
das dritte Gehäuse (3) mit einem konvexen Block (31) versehen ist, wobei der konvexe Block (31) ein Vorsprung ist, der zu dem dritten Gehäuse (3) gehört;
wobei das zweite Gehäuse (2) eine zweite Nut (22) definiert, die dem konvexen Block (31) entspricht;
wobei der Vorsprung (11) und die erste Nut (21) und der konvexe Block (31) und die zweite Nut (22) jeweils pressgepasst sind, wobei das zweite Gehäuse (2) ferner eine Erscheinungsoberfläche (25) umfasst, wobei die Erscheinungsoberfläche (25) eine externe und sichtbare Umfangsoberfläche des zweiten Gehäuses (2) ist, das erste Gehäuse (1) und das dritte Gehäuse (3) ferner jeweils eine Außenoberfläche (12, 32) umfassen, die Erscheinungsoberfläche (25) aus den Außenoberflächen (12, 32) des ersten Gehäuses (1) und des dritten Gehäuses (3) vorstehend ist;
wobei das dritte Gehäuse (3) ferner gegenüberliegende obere und untere Enden (33, 34) umfasst, die gegenüberliegenden oberen und unteren Enden (33, 34) des dritten Gehäuses (3) eine andere wasserdichte Struktur verwenden, die gegenüberliegenden oberen und unteren Enden (33, 34) des dritten Gehäuses (3) jeweils eine Wölbung (35) definieren, das zweite Gehäuse (2) ebenso ferner andere gegenüberliegende obere und untere Enden (23, 24) umfasst, die anderen gegenüberliegenden oberen und unteren Enden (23, 24) des zweiten Gehäuses (2) streifenartige Strukturen sind, die anderen gegenüberliegenden oberen und unteren Enden (23, 24) des zweiten Gehäuses (2), die streifenartige Strukturen sind, in den Wölbungen (35) montiert und mit dem ersten Gehäuse (1) pressgepasst sind, um mit dem ersten Gehäuse (1) zusammenmontiert zu werden;
wobei das erste Gehäuse (1) ebenso gegenüberliegende obere und untere Endstrukturen (13, 14) umfasst, die gegenüberliegenden oberen und unteren Endstrukturen (13, 14) des ersten Gehäuses (1) jeweils mit einem vorstehenden Streifen (15) versehen sind, der vorstehende Streifen (15) ein Vorsprung und streifenförmig ist, die vorstehenden Streifen (15) des ersten Gehäuses (1) in den Wölbungen (35) des dritten Gehäuses (3) montiert sind, um mit den anderen gegenüberliegenden oberen und unteren Enden (23, 24) des zweiten Gehäuses (2), die streifenartige Strukturen sind, in den Wölbungen (35) des dritten Gehäuses (3) pressgepasst zu werden, die vorstehenden Streifen (15) des ersten Gehäuses (1) die anderen gegenüberliegenden oberen und unteren Enden (23, 24) des zweiten Gehäuses (2), die streifenartige Strukturen sind, pressen, um in den Wölbungen (35) des dritten Gehäuses (3) elastisch deformiert zu werden.

2. Dreisichere Struktur nach Anspruch 1, wobei:
jeder der vorstehenden Streifen (15) ferner eine obere Oberfläche (15a) umfasst, jedes der anderen gegenüberliegenden oberen und unteren Enden (23, 24) des zweiten Gehäuses (2), die streifenartige Strukturen sind, ferner zwei gegenüberliegende Seitenwände (23b) umfasst, die obere Oberfläche (15a) jedes der vorstehenden Streifen (15) und jedes der anderen gegenüberliegenden oberen und unteren Enden (23, 24) des zweiten Gehäuses (2), die streifenartige Strukturen sind, pressgepasst sind, ein Spalt (100c) zwischen jeder der zwei gegenüberliegenden Seitenwände (23b) und der entsprechenden Wölbung (35) bereitgestellt ist.

3. Dreisichere Struktur nach Anspruch 1, wobei:
eine Gleitschutzstruktur auf der Erscheinungsoberfläche (25) des zweiten Gehäuses (2) bereitgestellt ist.

4. Dreisichere Struktur nach Anspruch 1, wobei:
der Vorsprung eine erste obere Oberfläche (11a) umfasst, der konvexe Block (31) eine zweite obere Oberfläche (31a) umfasst, die erste Nut (21) eine erste untere Oberfläche (21a) umfasst, die zweite Nut (22) eine zweite untere Oberfläche (22a) umfasst, die erste obere Oberfläche (11a) des Vorsprungs (11) und die erste untere Oberfläche (21a) der ersten Nut (21) pressgepasst sind und die zweite obere Oberfläche (31a) des konvexen Blocks (31) und die zweite untere Oberfläche (22a) der zweiten Nut (22) pressgepasst sind.

5. Dreisichere Struktur, nach Anspruch 4, wobei:
der Vorsprung (11) ferner zwei gegenüberliegende erste Seitenwände (11b) umfasst, ein Spalt (100a) zwischen jeder der ersten Seitenwände (11b) und der ersten Nut (21) bereitgestellt ist, der konvexe Block (31) ebenso zwei gegenüberliegende zweite Seitenwände (31b) umfasst, ein anderer Spalt (100b) zwischen jeder der zweiten Seitenwände (31b) und der zweiten Nut (22) bereitgestellt ist.

6. Dreisichere Struktur, nach Anspruch 5, wobei:
die Position des Vorsprungs (11) und die Position des konvexen Blocks (31) einander gegenüberliegend sind, die Position der ersten Nut (21) und die Position der zweiten Nut (22) ebenso einander gegenüberliegend sind, ferner zwischen der ersten Nut (21) und der zweiten Nut (22) ein Teiler bereitgestellt ist, der Vorsprung (11) und der konvexe Block (31) gemeinsam gegen den Teiler drücken, um eine Presspassung auszubilden.

7. Dreisichere Struktur nach Anspruch 1, wobei:
das erste Gehäuse (1) ferner mit mindestens vier ersten Positioniersäulen (16) versehen ist, das zweite Gehäuse (2) mit einer Vielzahl von ersten Positionierlöchern (26) versehen ist, deren Anzahlen gleich den Anzahlen der ersten Positioniersäulen (16) sind, die Position jeder der ersten Positioniersäulen (16) der Position eines der entsprechenden ersten Positionierlöcher (26) gegenüberliegt und jede der ersten Positioniersäulen (16) mit einem der entsprechenden ersten Positionierlöcher (26) zusammenmontiert ist.

8. Dreisichere Struktur, nach Anspruch 7, wobei:
das dritte Gehäuse (3) ferner mit mindestens vier zweiten Positioniersäulen (36) versehen ist, das zweite Gehäuse (2) ebenso mit einer Vielzahl von zweiten Positionierlöchern (27) versehen ist, deren Anzahlen gleich den Anzahlen der zweiten Positioniersäulen (36) sind, die Position jeder der zweiten Positioniersäulen (36) der Position eines der entsprechenden zweiten Positionierlöcher (27) gegenüberliegt und jede der zweiten Positioniersäulen (36) mit einem der entsprechenden zweiten Positionierlöcher (27) zusammenmontiert ist.

9. Dreisichere Struktur nach Anspruch 1, wobei:
das dritte Gehäuse (3) ferner mit mindestens vier vorstehenden zylindrischen Säulen (38) versehen ist, jede der zylindrischen Säulen (38) ein Bolzenloch definiert, jede der zylindrischen Säulen ferner eine ringförmige Stufe (40) umfasst, das zweite Gehäuse (2) an den Positionen, die den Positionen der zylindrischen Säulen entsprechen, mit einer Vielzahl von kreisförmigen Ringen (28) versehen ist, deren Anzahlen gleich den Anzahlen der zylindrischen Säulen (38) sind, jeder der kreisförmigen Ringe (28) auf einer der entsprechenden ringförmigen Stufen (40) ummantelt ist, das erste Gehäuse (1) mit Schraublöchern in Positionen versehen ist, die den Positionen der Bolzenlöcher entsprechen und in Anzahlen gleich den Anzahlen der Bolzenlöcher sind, das dritte Gehäuse, das zweite Gehäuse und das erste Gehäuse über Bolzen montiert und miteinander verbunden sind.

10. Mobiltelefon, umfassend eine dreisichere Struktur nach einem der Ansprüche 1 bis 9.

## Revendications

1. Une structure à triple protection étant un logement imperméable à l'eau, anti-poussière et résistant aux chocs, la structure à triple protection comprenant un premier boîtier (1), un deuxième boîtier (2) et un troisième boîtier (3), le premier boîtier (1) et le troisième boîtier (3) étant respectivement assemblés au deuxième boîtier (2), **caractérisé par** :
le premier boîtier (1) pourvu d'une saillie (11) ;
le deuxième boîtier (2) en matériau souple et définissant une première rainure (21) correspondant à la saillie (11) du premier boîtier (1), le matériau souple étant un matériau élastique ;
le troisième boîtier (3) pourvu d'un bloc convexe (31), le bloc convexe (31) étant une saillie appartenant au troisième boîtier (3) ;
dans lequel le deuxième boîtier (2) définit une seconde rainure (22) correspondant au bloc convexe (31) ;
dans lequel la saillie (11) et la première rainure (21), et le bloc convexe (31) et la seconde rainure (22) sont chacun à ajustement serré, le deuxième boîtier (2) comprend en outre une surface d'aspect (25), la surface d'aspect (25) est une surface périphérique externe et visible du deuxième boîtier (2), le premier boîtier (1) et le troisième boîtier (3) comprennent en outre respectivement une surface externe (12, 32), la surface d'aspect (25) fait saillie hors des surfaces externes (12, 32) du premier boîtier (1) et du troisième boîtier (3) ;
dans lequel le troisième boîtier (3) comprend en outre des extrémités supérieure et inférieure opposées (33, 34), les extrémités supérieure et inférieure opposées (33, 34) du troisième boîtier (3) font appel à une autre structure imperméable à l'eau, les extrémités supérieure et inférieure opposées (33, 34) du troisième boîtier (3) définissent respectivement une concavité (35), le deuxième boîtier (2) comprend également en outre d'autres extrémités supérieure et inférieure (23, 24) opposées, les autres extrémités supérieure et inférieure opposées (23, 24) du deuxième boîtier (2) sont des structures de type bande, les autres extrémités supérieure et inférieure opposées (23, 24) du deuxième boîtier (2) étant des structures de type bande sont assemblées dans les concavités (35) et sont à ajustement serré avec le premier boîtier (1) pour s'assembler conjointement avec le premier boîtier(1) ;
dans lequel le premier boîtier (1) comprend également des structures d'extrémité supérieure et inférieure opposées (13, 14), les structures d'extrémité supérieure et inférieure opposées (13, 14) du premier boîtier (1) sont respectivement pourvues d'une bande en saillie (15), la bande en saillie (15) est une saillie et en forme de bande, les bandes en saillie (15) du premier boîtier (1) sont assemblées dans les concavités (35) du troisième boîtier (3) pour être à ajustement serré avec les autres extrémités supérieure et inférieure opposées (23, 24) du deuxième boîtier (2) étant des structures de type bande dans les concavités (35) du troisième boîtier (3), les bandes en saillie (15) du premier boîtier (1) pressent les autres extrémités supérieure et inférieure opposées (23, 24) du deuxième boîtier (2) étant des structures de type bande pour être déformées de manière élastique dans les concavités (35) du troisième boîtier (3).

2. Structure à triple protection selon la revendication 1, dans laquelle :
chacune des bandes en saillie (15) comprend en outre une surface supérieure (15a), chacune des autres extrémités supérieure et inférieure opposées (23, 24) du deuxième boîtier (2) étant des structures de type bande comprennent en outre deux parois latérales opposées (23b), la surface supérieure (15a) de chacune des bandes en saillie (15) et chacune des autres extrémités supérieure et inférieure opposées (23, 24) du deuxième boîtier (2) étant des structures de type bande sont à ajustement serré, un espace (100c) est prévu entre chacune des deux parois latérales opposées (23b) et la concavité correspondante (35).

3. Structure à triple protection selon la revendication 1, dans laquelle :
une structure antidérapante est prévue sur la surface d'apparence (25) du deuxième boîtier (2).

4. Structure à triple protection selon la revendication 1, dans laquelle :
la saillie comprend une première surface supérieure (11a), le bloc convexe (31) comprend une seconde surface supérieure (31a), la première rainure (21) comprend une première surface inférieure (21a), la seconde rainure (22) comprend une seconde surface inférieure (22a), la première surface supérieure (11a) de la saillie (11) et la première surface inférieure (21a) de la première rainure (21) sont à ajustement serré, et la seconde surface supérieure (31a) du bloc convexe (31) et la seconde surface inférieure (22a) de la seconde rainure (22) sont à ajustement serré.

5. Structure à triple protection selon la revendication 4, dans laquelle :
la saillie (11) comprend en outre deux premières parois latérales opposées (11b), un espace (100a) est prévu entre chacune des premières parois latérales (11b) et la première rainure (21), le bloc convexe (31) comprend également deux secondes parois latérales opposées (31b), un autre espace (100b) est prévu entre chacun des secondes parois latérales (31b) et la seconde rainure (22).

6. Structure à triple protection selon la revendication 5, dans laquelle :
la position de la saillie (11) et la position du bloc convexe (31) sont opposées l'une à l'autre, la position de la première rainure (21) et la position de la seconde rainure (22) sont également opposées l'une à l'autre, un diviseur est en outre prévu entre la première rainure (21) et la seconde rainure (22), la saillie (11) et le bloc convexe (31) poussent de manière coopérative contre le diviseur pour former un ajustement serré.

7. Structure à triple protection selon la revendication 1, dans laquelle :
le premier boîtier (1) est en outre pourvu d'au moins quatre premières colonnes de positionnement (16), le second boîtier (2) est pourvu d'une pluralité des premiers trous de positionnement (26) dont les nombres sont identiques aux nombres des premières colonnes de positionnement (16), la position de chacune des premières colonnes de positionnement (16) est opposée à la position de l'un des premiers trous de positionnement correspondants (26), et chacune des premières colonnes de positionnement (16) est assemblée conjointement avec l'un des premiers trous de positionnement correspondants (26).

8. Structure à triple protection selon la revendication 7, dans laquelle :
le troisième boîtier (3) est en outre pourvu d'au moins quatre secondes colonnes de positionnement (36), le second boîtier (2) est également pourvu d'une pluralité de seconds trous de positionnement (27) dont les nombres sont identiques aux nombres des secondes colonnes de positionnement (36), la position de chacune des secondes colonnes de positionnement (36) est opposée à la position de l'un des seconds trous de positionnement correspondants (27), et chacune des secondes colonnes de positionnement (36) est assemblée conjointement avec l'un des seconds trous de positionnement correspondants (27).

9. Structure à triple protection selon la revendication 1, dans laquelle :
le troisième carter (3) est en outre pourvu d'au moins quatre colonnes cylindriques en saillie (38), chacune des colonnes cylindriques (38) définit un trou de boulon, chacune des colonnes cylindriques comprend en outre une étape annulaire (40), le deuxième boîtier (2) aux positions correspondant aux positions des colonnes cylindriques étant pourvue d'une pluralité d'anneaux circulaires (28) dont les nombres sont identiques aux nombres des colonnes cylindriques (38), chacun des anneaux circulaires (28) est emmanché sur l'une des étapes annulaires (40) correspondantes, le premier boîtier (1) est pourvu de trous de vis dans des positions correspondant aux positions des trous de boulon et en nombres identiques au nombre des trous de boulon, du troisième boîtier, du deuxième boîtier et du premier boîtier sont assemblés et fixés ensemble par l'intermédiaire de boulons.

10. Téléphone mobile comprenant une structure à triple protection selon l'une quelconque des revendications 1 à 9.
